# EUROPEAN PATENT APPLICATION

(11) **EP 4 789 838 A1**
(43) Date of publication of application: **12.08.2026**
(21) Application number: 24874587.9
(22) Date of filing: 01.10.2024
(51) Int. Cl.: B29C 49/02, B29B 9/12, B29B 11/06, B29B 11/14, B29C 49/12, C08K 5/10, C08K 5/16, C08K 5/29, C08L 23/04, C08L 23/06, C08L 23/10, C08L 23/12, C08L 91/06

(54) **METHOD FOR PRODUCING BLOW-MOLDED ARTICLE, RESIN COMPOSITION, AND PELLET**

(30) Priority: 03.10.2023 JP 2023172370; 03.10.2023 JP 2023172354; 09.08.2024 JP 2024134343
(71) Applicant: Canon Kabushiki Kaisha, Tokyo 146-8501 (JP)
(72) Inventor: DOI, Yohei, Tokyo 146-8501 (JP); ASHIBE, Tsunenori, Tokyo 146-8501 (JP)
(74) Representative: TBK
(86) International application number: PCT/JP2024/035048
(87) International publication number: WO 2025/074985

(57) **Abstract**

A method for producing a blow-molded article that can prevent the transfer of a wax-derived component to the surface of a blow-molded article. The method for producing a blow-molded article, comprising a step of obtaining a blow-molded article by blow-molding a resin mixture comprising at least wax, polyethylene or polypropylene and a carbodiimide compound.

## Description

### TECHNICAL FIELD

The present disclosure relates to a method for producing a blow-molded article, a resin composition, and a pellet.

### BACKGROUND ART

In electrophotographic image forming apparatuses, since toner bottles for supplying toner and the like need to be strong enough not to break when dropped, a blow-molded article made of, in addition to polyethylene terephthalate which is a polyester resin, polyethylene (hereinafter referred to as "PE") or polypropylene (hereinafter referred to as "PP") may be used (PTL 1).

In recent years, in order to protect the environment, thermoplastic resin products and their parts have been collected, and then regenerated and recycled by temporarily changing their original shapes. Here, as a method of recycling thermoplastic resins such as polyethylene or polypropylene, as described in paragraph [0002] in PTL 2, chemical recycling and material recycling are known.

### CITATION LIST

### PATENT LITERATURE

[PTL 1] Japanese Patent Publication No. H06-067536
[PTL 2] Japanese Patent Publication No. 2009-001693

### SUMMARY OF INVENTION

### TECHNICAL PROBLEM

Chemical recycling requires a multi-step process as disclosed in PTL 2, which requires decomposition facilities and polymerization facilities, resulting in high recycling costs. In addition, it also has a large environmental burden. On the other hand, in material recycling, a process of washing bottles is generally performed. However, bottles may be washed a plurality of times using water, acids, alkalis and the like, and a drying process is also required. Therefore, washing bottles can also increase the environmental burden.

Here, in order to reduce the environmental burden, the inventors simplified or omitted washing of toner bottles to be recycled, and produced toner bottles again using polyethylene or polypropylene (hereinafter referred to as "material-recycled PE" or "MR-PE" or "material-recycled PP" or "MR-PP") obtained from toner bottles with toner still attached to the inside. Thus, they found that, when toners were stored in the toner bottles obtained in this manner, the surfaces of toner particle was sometimes deformed at the contact point between the toner inside of the toner bottle and the inner surface of the toner bottle. Toner particle with deformed surfaces may cause development defects such as insufficient transfer during electrophotographic development (when the toner is transferred to the photosensitive drum), and as a result, may cause image density non-uniformity in electrophotographic images.

At least one aspect of the present disclosure is to provide a method for producing a blow-molded article through which it is possible to prevent wax-derived components from being transferred to a surface of a blow-molded article.

At least one aspect of the present disclosure is to provide a resin composition that contributes to preventing wax-derived components from being transferred to a surface of a blow-molded article.

At least one aspect of the present disclosure is to provide pellets that contribute to preventing wax-derived components from being transferred to a surface of a blow-molded article.

### SOLUTION TO PROBLEM

According to at least one aspect of the present disclosure, there is provided a method for producing a blow-molded article, comprising a step of obtaining a blow-molded article by blow-molding a resin mixture comprising at least wax, polyethylene or polypropylene and a carbodiimide compound.

According to at least one aspect of the present disclosure, there is provided a resin composition comprising a melt-kneaded product of wax, polyethylene or polypropylene and a carbodiimide compound.

According to at least one aspect of the present disclosure, there is provided a pellet comprising a melt-kneaded product of wax, polyethylene or polypropylene and a carbodiimide compound.

### ADVANTAGEOUS EFFECTS OF INVENTION

According to at least one aspect of the present disclosure, it is possible to obtain a method for producing a blow-molded article through which it is possible to prevent wax-derived components from being transferred to the surface of a blow-molded article. According to at least one aspect of the present disclosure, it is possible to obtain a resin composition that contributes to prevention of wax-derived components from being transferred to the surface of a blow-molded article. In addition, according to at least one aspect of the present disclosure, it is possible to obtain pellets that contribute to prevention of wax-derived components from being transferred to the surface of a blow-molded article.

### BRIEF DESCRIPTION OF THE DRAWINGS

[Fig. 1] Fig. 1 is a schematic view of an image forming apparatus.
[Fig. 2] Fig. 2 is a schematic view illustrating a preform molding method.
[Fig. 3] Fig. 3 is a schematic view illustrating a stretch blow molding method.
[Fig. 4] Fig. 4 is a schematic view of one-stage method stretch blow molding.
[Fig. 5] Fig. 5 is a schematic view of direct blow molding.
[Fig. 6] Fig. 6 is a schematic view of a biaxially stretched blow bottle.
[Fig. 7] Fig. 7 is a schematic view of a direct blow bottle.
[Fig. 8] Fig. 8 is a predicted reaction scheme between a wax-derived component and a carbodiimide compound.

### DESCRIPTION OF THE EMBODIMENTS

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily. In addition, in the present disclosure, for example, descriptions such as "at least one selected from the group consisting of XX, YY and ZZ" mean any of XX, YY, ZZ, the combination of XX and YY, the combination of XX and ZZ, the combination of YY and ZZ, and the combination of XX, YY, and ZZ.

As described above, when toner is stored in a toner bottle molded using MR-PE or MR-PP obtained from a toner bottle with toner still attached, the surface of the stored toner is sometimes deformed. The inventors speculate the reason for this is as follows.

That is, it is thought that wax comprised in the toner attached to the toner bottle before recycling is mixed into the toner bottle. Moreover, it is thought that at least a part of the mixed in wax is present on the inner surface (hereinafter referred to as an "inner surface") of the toner bottle formed using MR-PE or MR-PP. In addition, it is thought that at least a part of the wax comprised in the MR-PE or MR-PP is hydrolyzed by water in the air or the like, and the hydrolyzed product is present on the inner surface of the toner bottle after blow molding. In addition, it is thought that, when a preform comprising MR-PE or MR-PP is used as a resin mixture, at least a part of the preform is hydrolyzed by water in the air or the like, and the hydrolyzed product is present on the inner surface of the toner bottle after blow molding.

Moreover, it is thought that the surface of toner particles is deformed when the toner stored in the toner bottle comes into contact with the wax or hydrolysate exposed on the inner surface of the toner bottle. Hereinafter, the wax and its hydrolysate will be collectively referred to as a "wax-derived component." In addition, in the present disclosure, deformation on the surface of toner particles due to wax-derived components may be referred to as chemical attack.

It is thought that transfer of wax-derived components to the inner surface of the toner bottle is likely to occur during heating in blow molding. During blow molding, the raw materials for blow-molded articles are heated to a glass transition temperature of polyethylene or polypropylene, which is a main material, or higher. Therefore, polyethylene or polypropylene has high molecular mobility at the glass transition temperature or higher. On the other hand, for example, the wax generally has a low molecular weight of about 300 to 500, and a hydrolyzed product of the wax has a lower molecular weight. Therefore, the wax-derived components tend to transfer to the surface including the inner surface of the blow-molded article.

Therefore, it is thought that, when the resin mixture is heated to a melting point of polyethylene or polypropylene, which is a main material of the resin mixture, or higher, and blow-molded, the wax-derived components transfer to the surface including the inner surface of the blow-molded article. Therefore, more wax-derived components are present on the inner surface of the toner bottle, which is a blow-molded article made of MR-PE or MR-PP.

In addition, when a preform is used for blow molding, in the preform immediately after molding, there is almost no difference in the concentration of the wax-derived components between the inside of the preform and the inner surface. However, it is thought that, when a preform is stretch-blow-molded, if the preform is heated to a melting point of polyethylene or polypropylene or higher, which is a main material of the preform, low-molecular-weight wax-derived components transfer to the surface including the inner surface of the preform. Therefore, more wax-derived components are present on the inner surface of the toner bottle, which is a stretch-blow-molded article of a preform comprising MR-PE or MR-PP.

On the basis of these considerations, the inventors conducted repeated studies to obtain a blow-molded article that can be used as a toner bottle which can prevent wax-derived components from being transferred to the surface of the blow-molded article and can prevent the stored toner from deforming based on the premise of using MR-PE or MR-PP regenerated from toner bottles with toner attached. As a result, it was found that a blow-molded article obtained by a method of blow molding a resin mixture comprising at least wax, polyethylene or polypropylene and a carbodiimide compound contributes to addressing the above problems.

The inventors speculate the reason why the blow-molded article obtained from the resin mixture contributes to addressing the above problems as follows.

One reason is thought to be that the resin mixture is melt-kneaded during blow molding, and in the melt-kneading process, wax-derived components comprised in the resin mixture react with the carbodiimide compound, and the wax-derived components become polymerized. Then, it is thought that the polymerized wax-derived components have reduced flowability. As a result, it is thought that transfer of wax-derived components to the surface of the preform or blow-molded article is inhibited.

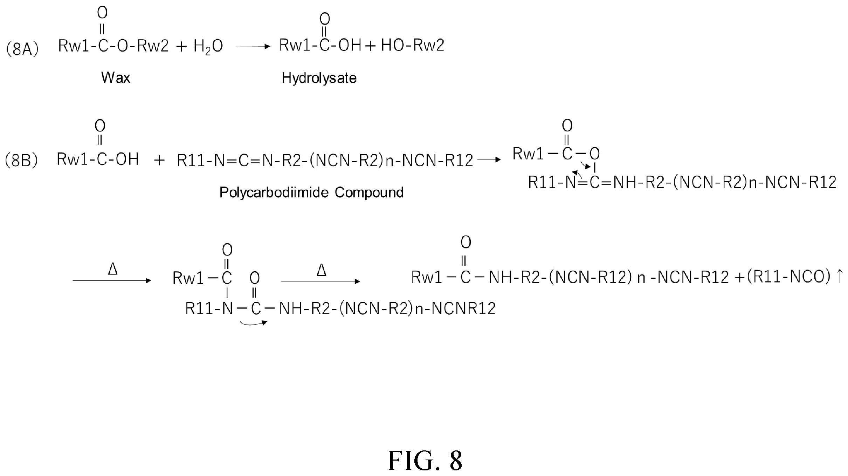

Another reason is thought to be that, when the wax comprises an ester wax, as described above, the wax in the raw material is hydrolyzed by water in the air or the like, and as shown in Fig. 8A, a carboxylic acid is generated as one of the wax-derived components. Then, the generated carboxylic acid transfers to the inner surface of the preform or toner bottle, which may result in deformation of the toner.

However, when the resin mixture comprises a carbodiimide compound, in the process of melt-kneading the resin mixture, as shown in Fig. 8B, a carboxylic acid as a wax-derived component reacts with the carbodiimide compound, and the wax-derived component is relatively polymerized. As a result, it is thought that it is possible to inhibit transfer of wax-derived components and it is possible to inhibit the presence of wax-derived components on the inner surface of the preform or blow-molded article. Here, Rw1, Rw2, R1, R2 and the like in Figs. 8A and 8B represent organic groups in ester waxes and carbodiimide compounds.

A method for producing a blow-molded article according to one aspect of the present disclosure includes a step of obtaining a blow-molded article by blow-molding a resin mixture comprising at least wax, polyethylene or polypropylene and a carbodiimide compound. More specifically, for example, the method includes a step of obtaining a blow-molded article by blow-molding a melt-kneaded product of a resin mixture comprising at least wax, polyethylene or polypropylene and a carbodiimide compound.

Here, "melt-kneading" means applying a shear force when a resin mixture is heated and has flowability, specifically, for example, when a resin mixture is heated to a temperature equal to or higher than the glass transition temperature of polyethylene or polypropylene in the resin mixture, particularly, a temperature equal to or higher than the melting point. Examples of methods of applying a shear force when a resin mixture is melt-kneaded include a method of applying a shear force with a screw while heating a resin mixture using a twin-screw extruder, a method of injection molding a melt of a resin mixture, and a method of extrusion molding a melt of a resin mixture.

More specifically, for example, "melt-kneading" includes applying a shear force when the resin mixture is heated to a temperature equal to or higher than the glass transition temperature of the polyethylene or the polypropylene, more preferably, a temperature equal to or higher than the melting point of the the polyethylene or the polypropylene, and the polyethylene or the polypropylene has fluidity, and at least a part of the wax-derived component melts, or at least a part of the carbodiimide compound melts, or at least a part of the wax-derived component and at least a part of the carbodiimide compound melt. Moreover, "melt-kneaded product" includes those obtained by performing cooling through the above "melt-kneading" process.

The blow molding method is not particularly limited, and stretch blow molding, direct blow molding or the like can be used. That is, the blow-molded article may be a stretch-blow-molded article or a direct blow-molded article.

Stretch blow molding is a method in which a preform as a resin mixture is molded from a molten raw material, and the preform is then stretch-blow-molded.

On the other hand, direct blow molding is a method in which the molten resin mixture is directly blow-molded. In this case, pellets formed by melt-kneading raw materials may be used as the resin mixture.

Therefore, specific examples of melt-kneading include melt-kneading when pellets of a resin mixture are produced, melt-kneading when a preform for stretch blow molding is produced, and melt-kneading by extrusion of an injection molding machine or the like during direct blow molding.

Examples of implementations for carrying out the present disclosure will be explained next in detail with reference to accompanying drawings. However, the scope of the present invention is not limited to the following embodiments. In the explanation that follows, unless noted otherwise, the notation "%" signifies "mass%".

### (Pellet and preform)

A blow-molded article can be produced by blow-molding pellets or preforms as a resin mixture. That is, pellets and preforms formed by melt-kneading raw materials can be used as the resin mixture. In addition, the pellets may be a pellet mixture obtained by mixing different pellets (pellet blending).

The pellets comprise at least wax, polyethylene or polypropylene and a carbodiimide compound. The pellets preferably comprise a wax-comprising toner. A method of forming pellets will be described below in detail.

The preform is produced from a melt-kneaded product of a resin mixture comprising at least wax, polyethylene or polypropylene and a carbodiimide compound. The preform preferably comprises a wax-comprising toner. The preform can be molded, for example by injection molding. A preform molding method will be described below in detail.

The polyethylene or polypropylene is not particularly limited as long as it is a thermoplastic polyethylene or polypropylene.

A carbodiimide compound has at least one carbodiimide group represented by "-N=C=N-" in the molecule. Examples of carbodiimide compounds include carbodiimides and polycarbodiimides.

The polyethylene or polypropylene may be a material-recycled polyethylene or polypropylene, or virgin polyethylene or polypropylene that has not undergone molecular weight reduction. However, when MR-PE or MR-PP is made from recycled toner bottles, the effects of the present disclosure become more remarkable. Therefore, the resin mixture preferably comprises MR-PE or MR-PP. The MR-PE or MR-PP may be obtained using recycled raw materials with toner attached to the surface. The toner comprises a component such as wax. That is, the MR-PE or MR-PP may comprise wax.

### <Polyethylene (PE)>

Polyethylene (PE) is obtained by a polymerization reaction of ethylene. PE is not particularly limited, and known polyethylene can be used. Polyethylene is, for example, at least one selected from the group consisting of HDPE (high-density polyethylene), LDPE (low-density polyethylene), and LLDPE (linear low-density polyethylene). Preferably, the polyethylene includes HDPE (high-density polyethylene). For example, "KEIYO B5804" (product name, commercially available from Keiyo Polyethylene Co., Ltd.) can be used. In addition, a mixture with other resins may be used.

### <Polypropylene (PP)>

Polypropylene (PP) is obtained by a polymerization reaction of propylene. Polypropylene is not particularly limited, and known polypropylene can be used. Polypropylene is, for example, at least one selected from the group consisting of a homopolymer, which is a homopolymer of only propylene, a random copolymer, which is a copolymer with ethylene, and a block copolymer, which is a heterophasic copolymer. Preferably, the polypropylene includes a block copolymer. For example, "Prime Polypro E701G" (product name, commercially available from Prime Polymer Co., Ltd.) can be used. In addition, a mixture with other resins may be used.

The content of polyethylene or polypropylene in the pellet or preform is not particularly limited, and is preferably 80 mass% or more and more preferably 90 mass% or more based on the mass of the pellet or preform. In addition, the content is preferably 99.9 mass% or less and more preferably 99.5 mass% or less. For example, the content is preferably in a range of 80 to 99.9 mass% or 90 to 99.5 mass%.

### <Carbodiimide compound>

A carbodiimide compound has at least one carbodiimide group in a molecule. Examples of carbodiimide compounds include carbodiimide and polycarbodiimide.

Carbodiimide and polycarbodiimide have at least one carbodiimide group represented by "-N=C=N-" in the molecule. Among these, it is preferable to use a polycarbodiimide having two or more carbodiimide groups in the molecule, which is expected to interact (react) with wax-derived components with higher efficiency.

Here, the polycarbodiimide compound exemplified in FIG. 8 has a structure in which n represents an integer of 1 or more, R2 is a divalent residue obtained by removing two isocyanate groups from a diisocyanate compound and has a benzene aromatic ring directly bonded to an NCN group, and the benzene aromatic ring has no substituent or only one substituent at both ortho positions for the position bonding to the NCN group. In addition, R11 and R12 each independently represent a residue of an organic compound having one functional group that can react with an isocyanate group. As such polycarbodiimides, for example, "Carbodilite HMV-15CA" (product name, commercially available from Nisshinbo Chemical Inc.) is available.

A polycarbodiimide can be produced by, for example, heating an organic isocyanate in the presence of a catalyst and performing a decarboxylation condensation reaction. Examples of organic isocyanates include aliphatic diisocyanates, alicyclic diisocyanates, and aromatic diisocyanates. Specific examples of polycarbodiimides include, for example, aromatic polycarbodiimides such as poly(4,4'-diphenylmethanecarbodiimide), poly(p-phenylenecarbodiimide), poly(m-phenylenecarbodiimide), poly(diisopropylphenylcarbodiimide), and poly(triisopropylphenylcarbodiimide); and alicyclic polycarbodiimides such as poly(dicyclohexylmethane carbodiimide). These polycarbodiimides may be used alone, and any combination of two or more thereof may be used.

Among these polycarbodiimides, aliphatic polycarbodiimides are preferable. As the aliphatic polycarbodiimides, for example, those commercially available as "Carbodilite HMV-15CA," "Carbodilite LA-1," and "Carbodilite HMV-5CA-LC" (all are product name, commercially available from Nisshinbo Chemical Inc.) can be used.

In order to sufficiently react wax-derived components and a carbodiimide compound, it is preferable to melt-knead a resin mixture comprising wax-derived components and a carbodiimide compound. It is thought that the reaction between wax-derived components and a carbodiimide compound is more likely to be promoted according to melt-kneading. Then, pellets or preforms can be formed using the melt-kneaded product obtained in this manner, and the pellets or preforms can be blow-molded to obtain a blow-molded article.

Examples of non-limiting methods of obtaining pellets and preforms include the following methods.

For example, a mixture comprising at least wax, polyethylene or polypropylene and a carbodiimide compound can be melt-kneaded, and the obtained melt-kneaded product can be pelletized to form pellets. In addition, the pellets obtained by the above method can be melt-kneaded and then molded to produce a preform.

The form in which a carbodiimide compound is added is not particularly limited. For example, a powdered carbodiimide compound can be used.

For example, wax-comprising MR-PE or MR-PP can be melt-kneaded to form pellets. A toner bottle comprising polyethylene or polypropylene with a wax-comprising toner attached may be pulverized, a carbodiimide compound may be added to the obtained pulverized product, and melt-kneading may be performed to form pellets. The obtained pellets can be blow-molded by a method described below to produce a blow-molded article. That is, the step of obtaining a blow-molded article by blow-molding a resin mixture preferably includes a step of obtaining pellets of a melt-kneaded product of the resin mixture, and a step of direct blow molding using the pellets.

In addition, the pellets obtained by the above method can be melt-kneaded and then molded to produce a preform. A preform molding method will be described below. The obtained preform can be blow-molded by a method described below to produce a blow-molded article. That is, the step of obtaining a blow-molded article by blow-molding a resin mixture preferably includes a step of obtaining pellets of a melt-kneaded product of the resin mixture, a step of producing a preform using the pellets, and a step of blow-molding the preform.

Since a carbodiimide compound such as a polycarbodiimide has high reactivity, it is preferable to stabilize physical properties of a reaction product between the wax-derived components and the carbodiimide compound while controlling the amount of the carbodiimide compound added.

For example, a carbodiimide compound may be diluted with polyethylene or polypropylene in advance, and melt-kneaded at a temperature equal to or higher than the melting point of polyethylene or polypropylene to prepare masterbatch pellets (second pellets). A pellet mixture in which the masterbatch pellets are mixed with the pellets (first pellets) comprising wax and polyethylene or polypropylene may be melt-kneaded.

The step of producing a blow-molded article preferably includes a step of melt-kneading wax and polyethylene or polypropylene to form first pellets, a step of melt-kneading a carbodiimide compound and other polyethylene or polypropylene to form second pellets, a step of mixing the first pellets and the second pellets to obtain a pellet mixture, and a step of blow-molding the pellet mixture.

Specifically, for example, wax (preferably wax-comprising toner) and polyethylene or polypropylene are melt-kneaded to form first pellets. The first pellets are pellets of wax-comprising MR-PE or MR-PP, obtained by melting and pelletizing MR-PE or MR-PP, for example, a pulverized product of used PE or PP toner bottles.

On the other hand, separately from the step of forming first pellets, a carbodiimide compound and other polyethylene or polypropylene are melt-kneaded to form second pellets.

The other polyethylene or polypropylene used to form the second pellets is not particularly limited, and may be the same polyethylene or polypropylene as the polyethylene or polypropylene comprised in the first pellets or may be a different polyethylene or polypropylene.

The dilution ratio when a carbodiimide compound is diluted with polyethylene or polypropylene in preparing masterbatch pellet (second pellets) is not particularly limited. For example, a carbodiimide compound is diluted preferably 5- to 15-fold and more preferably 10-fold with polyethylene or polypropylene. When the dilution ratio is set to 5-fold or more, the concentration of the carbodiimide compound is kept within an appropriate range, and unevenness is less likely to occur. In addition, when the dilution ratio is set to 15-fold or less, the amount of the carbodiimide compound used can be kept within an appropriate range without being excessively reduced. In this case, the obtained masterbatch pellets comprise polyethylene or polypropylene and an unreacted carbodiimide compound.

Next, the masterbatch pellets (second pellets) are mixed with polyethylene or polypropylene pellets (first pellets) (pellet blending) to obtain a pellet mixture. When the obtained pellet mixture is melt-kneaded at a temperature equal to or higher than the melting point of polyethylene or polypropylene, the carbodiimide compound can be reacted more uniformly with the wax-derived components comprised in the polyethylene or polypropylene pellets (first pellets). Here, unlike melt-kneading, pellet blending refers to stirring and mixing a plurality of materials at a temperature at which the resin component does not melt to create a substantially uniform state.

Next, pellets (third pellets) including a melt-kneaded product of the pellet mixture of the first pellets and the second pellets may be obtained and blow molding may be performed using a melt of the third pellets. Alternatively, the melt of the third pellets may be molded into a preform by a method such as injection molding.

In addition, a melt of a pellet mixture prepared by uniformly stirring (pellet blending) the first pellets and the second pellets in a blender or the like without preparing the third pellets can be directly blow-molded.

That is, a blow-molded article can be produced by blow-molding the pellet mixture of the first pellets and the second pellets by the above method. The step of blow molding preferably includes a step of injection molding a pellet mixture.

Alternatively, a melt of the pellet mixture can be molded into a preform by a method such as injection molding. Here, in the process of injection molding a melt of the pellet mixture, a shear force is applied to the melt so that the obtained preform is incorporated into a resin composition comprising the melt-kneaded product according to the present disclosure. When two types of pellets are uniformly stirred and then molded, the carbodiimide compound can be reacted more uniformly with the wax-derived components comprised in polyethylene or polypropylene.

As another method, a melt-kneaded product of a mixture comprising at least wax, polyethylene or polypropylene and a carbodiimide compound is not pelletized, and after a melt-kneading step, a preform is molded, and the obtained preform may be used as a resin mixture. For example, a toner bottle comprising a wax-comprising toner and polyethylene or polypropylene is pulverized, and a melt-kneaded product of the pulverized product may be directly molded into a preform.

In addition, as another method, for example, a method in which the melt-kneaded product is not pelletized, and after a melt-kneading of the resin mixture, a blow-molded article is molded may be exemplified.

The amount of the carbodiimide compound added with respect to 100 parts by mass of the wax is preferably 220 parts by mass or more, more preferably 400 parts by mass or more, and still more preferably 450 parts by mass or more. In addition, the amount is preferably 10,000 parts by mass or less, more preferably 1,500 parts by mass or less, and still more preferably 1,400 parts by mass or less. For example, the range of the amount of the carbodiimide compound added with respect to 100 parts by mass of the wax is preferably 220 to 10,000 parts by mass, more preferably 400 to 1,500 parts by mass, and still more preferably 450 to 1,400 parts by mass.

When the amount of the carbodiimide compound added is within the above range, wax-derived components can be reacted with the carbodiimide compound sufficiently and more reliably.

When the amount of the carbodiimide compound added with respect to 100 parts by mass of the wax is 220 parts by mass or more, the reaction between the carbodiimide compound and the wax-derived components sufficiently proceeds. As a result, this is preferable because it is easier to sufficiently inhibit transfer of wax-derived components to the surface of the blow-molded article. In addition, when the amount of the carbodiimide compound added with respect to 100 parts by mass of the wax is 10,000 parts by mass or less, since the reaction between the carbodiimide compound and the wax-derived components is restricted within a range that does not become excessive, the viscosity of polyethylene or polypropylene when melted does not become too high and can be kept within an appropriate range. As a result, this is preferable because molding defects due to decreased flowability of the resin during blow molding are less likely to occur. When the amount of the carbodiimide compound added is within the above range, it is possible to inhibit transfer of the wax to the surface of the molded article while maintaining moldability during blow molding.

As a method of reacting a carbodiimide compound with wax-derived components, for example, a method of heating a mixture of a carbodiimide compound or masterbatch pellets comprising a carbodiimide compound and wax-comprising polyethylene or polypropylene to a temperature equal to or higher than the melting point of polyethylene or polypropylene and melt-kneading it using an extruder may be exemplified.

The melt-kneading device is not particularly limited, and known devices such as a twin-screw extruder may be used. As the twin-screw extruder, for example, "PCM-46" (product name, commercially available from Ikegai Corporation) can be used. The temperature during melt kneading is not particularly limited, and for example, is preferably 180 to 260°C, more preferably 190 to 250°C, and still more preferably 200 to 240°C.

By melt-kneading, the wax is hydrolyzed, and the decomposed wax becomes more reactive with the carbodiimide. In addition, it is thought that the reaction between the decomposed wax and the carbodiimide compound is more likely to be promoted.

The wax comprised in the toner is not particularly limited, and waxes that are generally used in the toner may be exemplified. Specific examples of waxes are as follows.

Aliphatic hydrocarbon-based waxes such as low-molecular-weight polyethylenes, low-molecular-weight polypropylenes, polyolefin copolymers, polyolefin waxes, microcrystalline waxes, paraffin waxes, and fischer tropsch waxes; oxides of aliphatic hydrocarbon-based waxes such as oxidized polyethylene waxes; or block copolymers thereof; vegetable-based waxes such as candelilla wax, carnauba wax, Japan wax, and jojoba wax; animal-based waxes such as beeswax, lanolin, and spermaceti; mineral-based waxes such as ozokerite, ceresin, and petrolatum; waxes mainly composed of aliphatic esters such as montanoic acid ester wax and caster wax; and those obtained by partially or completely deoxidizing aliphatic esters such as deacidified carnauba wax. In addition, saturated linear fatty acids such as palmitic acid, stearic acid, montanoic acid, and long chain alkyl carboxylic acids with even longer chain alkyl groups; unsaturated fatty acids such as brassidic acid, eleostearic acid, and parinaric acid; saturated alcohols such as stearyl alcohol, eicosyl alcohol, behenyl alcohol, cannavir alcohol, ceryl alcohol, melissyl alcohol, and alkyl alcohols with even longer chain alkyl groups; polyhydric alcohols such as sorbitol; aliphatic amides such as linoleic acid amide, oleic acid amide, and lauric acid amide; saturated aliphatic bisamides such as methylene bisstearamide, ethylene biscapric acid amide, ethylene bislauric acid amide, and hexamethylene bisstearamide; unsaturated fatty acid amides such as ethylene bisoleic acid amide, hexamethylenebisoleic acid amide, N,N'-dioleyladipic acid amide, and N,N'-dioleylsebacic acid amide; aromatic bisamides such as m-xylene bisstearamide, and N,N'-distearylisophthalic acid amide; aliphatic metal salts (generally referred to as metal soap) such as calcium stearate, calcium laurate, zinc stearate, and magnesium stearate; waxes that are grafted onto an aliphatic hydrocarbon-based wax using a vinyl monomer such as styrene or acrylic acid; partial esterification products of fatty acids such as behenic acid monoglyceride and polyhydric alcohols; and methyl ester compounds having hydroxyl groups obtained by hydrogenating vegetable oils and fats. In the waxes exemplified in FIGS. 8A and 8B, Rw1 represents, for example, a hydrocarbon group having 1 to 40 carbon atoms. The hydrocarbon group is typically an alkyl group.

These waxes may be used alone, and any combination of two or more thereof may be used. The wax preferably comprises an ester wax. It is thought that the ester wax is hydrolyzed during blow molding or within the toner bottle, and acts as a component that deforms the toner. However, according to the method of the present disclosure, the hydrolyzed product is polymerized through its reaction with a carbodiimide compound, thereby preventing its transfer to the surface of the blow-molded article.

In addition, these waxes of which the molecular weight distribution has been sharped using a press sweating method, a solvent method, a recrystallization method, a vacuum distillation method, a supercritical gas extraction method or a melt crystallization method are preferably used. In addition, those from which low-molecular-weight solid fatty acids, low-molecular-weight solid alcohols, low-molecular-weight solid compounds, and other impurities have been removed are also preferably used.

Specific examples include Viscol (registered trademark) 330-P, 550-P, 660-P, and TS-200 (commercially available from Sanyo Chemical Industries, Ltd.), Hi-Wax 400P, 200P, 100P, 410P, 420P, 320P, 220P, 210P, and 110P (commercially available from Mitsui Chemicals, Inc.), Sasol H1, H2, C80, C105, and C77 (commercially available from Schumann Sasol), HNP-1, HNP-3, HNP-9, HNP-10, HNP-11, and HNP-12 (commercially available from Nippon Seiro Co., Ltd.), Unilin (registered trademark) 350, 425, 550, and 700, Unicid (registered trademark) 350, 425, 550, and 700 (commercially available from Toyo Petrolite Co., Ltd.), Japan wax, beeswax, rice wax, candelilla wax, carnauba wax (commercially available from Cerarica Noda Co., Ltd.).

The blow-molded article may comprise a colorant as necessary. Examples of colorants include carbon black. The content of the colorant in the blow-molded article is, for example, 0.01 to 0.20 mass%, or 0.02 to 0.10 mass%.

### <Stretch blow molding>

A method for producing a blow-molded article by stretch blow molding will be described below. Stretch blow molding is a method in which a preform is molded from the molten raw material, and the preform is then stretch-blow-molded. (I) Step of producing a preform

A method for producing a preform will be described below.

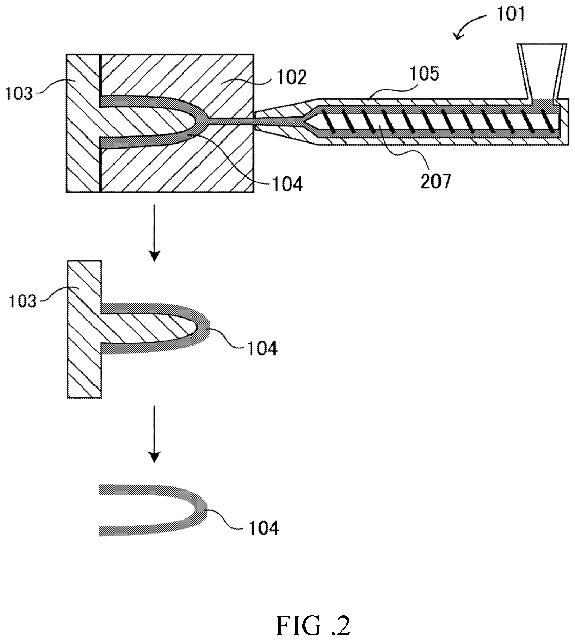

As shown in FIG. 2, a preform 104 having a test tube shape is molded by injection molding. Specifically, a heating cylinder 105 heats materials put into an injection molding machine 101 into a molten state, and an extrusion screw 207 injects the molten materials into preform molds 102 and 103, and removes them from the mold after cooling, and thereby the preform 104 is obtained. As the material, pellets comprising wax (preferably a wax-comprising toner), polyethylene or polypropylene and a carbodiimide compound can be used. Alternatively, a melt-kneaded product of a mixture comprising wax (preferably wax- comprising toner), polyethylene or polypropylene and a carbodiimide compound may be used.

In the preform molding step, a preform is preferably molded by injection molding. That is, the preform molding step preferably includes a step of injection molding of a melt-kneaded product of pellets. In addition, the preform preferably has a test tube shape. In the preform molding step, when raw materials melt, the wax is hydrolyzed. When wax-derived components react with the carbodiimide compound, the wax-derived components are easily polymerized.

### (II) a step of producing a blow-molded article by stretch blow-molding the preform

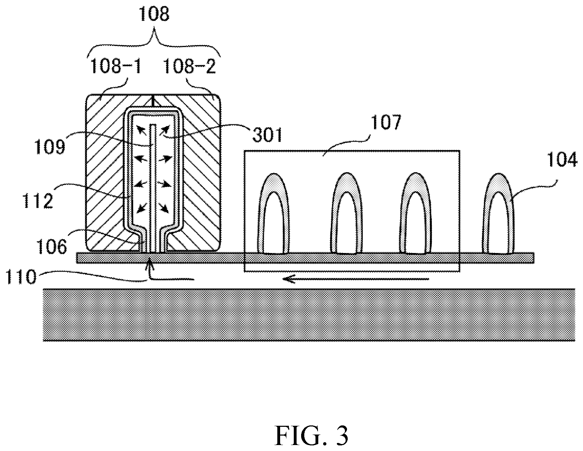

Next, a step of producing a blow-molded article by stretch blow-molding the preform will be described. As shown in FIG. 3, biaxial stretch-blowing (biaxially stretch-molding) of the preform 104 is performed. First, the preform 104 is put into a heating furnace 107 and heated to a temperature at which it can be stretched.

The heated preform 104 is removed from the heating furnace 107, and placed at an opening of a blow mold 108. Inside the blow mold 108, a cavity is formed by combining a left side mold 108-1 and a right side mold 108-2.

Preferably the heated preform is placed at the mouth of the blow mold within a short time (for instance within 10 seconds), so that the temperature of the heated preform does not drop before the start of a biaxial stretching step.

The heated preform placed in the blow mold 108 is stretched using a stretching rod 109 in the longitudinal direction of the preform. This is called primary stretching. In the primary stretching, it is preferable to introduce a gas so that the preform 104 does not come into contact with the stretching rod 109. The pressure of the gas in this case is called a primary blow pressure.

After the primary stretching is performed, a gas 110 is introduced from a preform opening 106, and the preform is stretched in a lateral direction (a circumferential direction, that is, a direction intersecting the stretching rod 109). This is called secondary stretching. In addition, the pressure of the gas in this case is called a secondary blow pressure. Examples of gases introduced during the primary stretching and the secondary stretching include air, nitrogen, carbon dioxide, and argon.

When these primary stretching and secondary stretching are performed, the preform 104 expands in directions shown by an arrow 111, comes into close contact with the inner wall of the blow mold 108, and cools and solidifies in that state, and a blow-molded article 112 is produced. The step of blow-molding the preform preferably includes a step of stretching the preform in a longitudinal direction of the preform using a stretching rod and a step of introducing a gas into the preform stretched in the longitudinal direction and stretching the preform in a circumferential direction.

The blow-molded article 112 is then retrieved, from the blow mold 108, by separating the left die 108-1 and the right die 108-2 of the blow mold 108. The blow-molded article 112 is stretched both longitudinally and transversally, and hence is a high-strength molded article.

In the stretching step of injection stretch-blow-molding, the preform is preferably in a non- crystalline state (non-crystalline, that is, an amorphous state). If the preform is maintained at the blow molding temperature in an amorphous state, it can be directly blown, that is, biaxially stretch-molded, to stretch and crystallize the PE or PP in the stretching direction, and a high-strength bottle can be formed.

Injection stretch blow molding methods include a single-stage method and a two-stage method. The single-stage method is a method in which residual heat from the preform immediately after retrieval from the mold is exploited to carry out stretch blow molding, as-is or with temperature control. The two-stage method is a method in which the preform is cooled down to room temperature, after which the temperature of the preform is adjusted again, whereupon stretch blow molding is carried out.

That is, the step of molding pellets to produce a preform and the molding step of stretch-blow-molding the preform to produce a stretch-blow-molded article may be performed continuously while maintaining the temperature of the preform. In addition, after the step of molding pellets to produce a preform, a molding step in which the preform is once cooled to room temperature and then stretch-blow-molded to mold a stretch-blow-molded article may be performed.

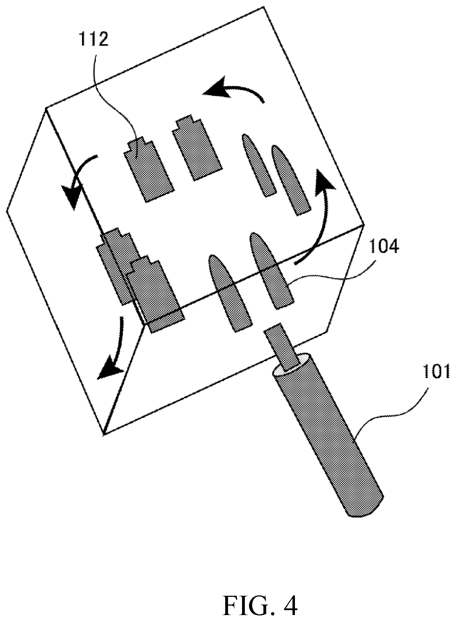

FIG. 4 shows a schematic diagram of the one-stage method. In the one-stage method, after the preform 104 is injection-molded from the injection molding machine 101, heat retention at a blow molding temperature (for example, 140 to 160°C) is immediately performed, and heating and blow molding are performed to produce the blow-molded article 112 in the method. In the one-stage method, a device in which an injection molding device and a blow molding device are integrated is used.

The two-stage method is a method in which a preform is injection-molded and then cooled and removed, and it is then heated to a blow molding temperature (for example, 140 to 160°C) in a separate blow molding device and subjected to blow molding. In the two-stage method, an injection molding device and a blow molding device are not integrated, but are each independently used.

The injection stretch-blow-molding method can be appropriately selected depending on components comprised in the preform and the like. The one-stage method is preferable in that it requires less energy for reheating than the two-stage method because it does not include a process of cooling the preform.

### <Direct blow molding>

A method for producing a blow-molded article by direct blow molding will be described below. Direct blow molding is a method in which molten raw materials or pellets formed from raw materials are directly blow-molded.

In direct blow molding, a molten resin mixture is blow-molded using an injection molding machine or the like. As materials used in direct blow molding, pellets comprising at least wax (preferably a wax-comprising toner), polyethylene or polypropylene and a carbodiimide compound can be used. Alternatively, a melt-kneaded product of a resin mixture comprising wax, polyethylene or polypropylene and a carbodiimide compound may be used.

One aspect of a method for producing a blow-molded article by direct blow molding will be described below.

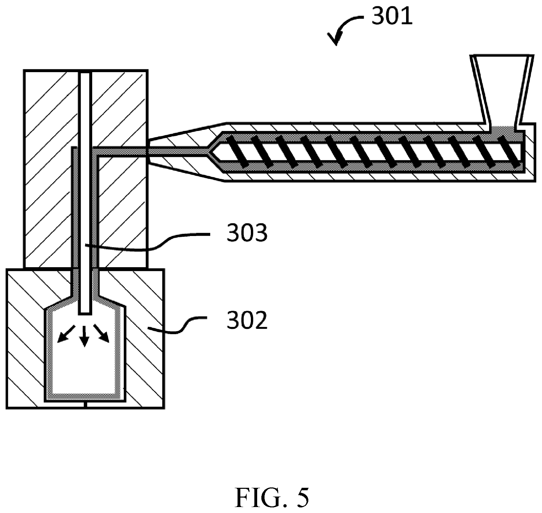

As shown in Fig. 5, a resin mixture (the pellets or a melt-kneaded product of raw materials) is put into a direct blow molding machine 301, heated, and melt-kneaded, and the melt-kneaded product of the resin mixture is dripped downward into a tubular form under its own weight.

Before the melt-kneaded product of the resin mixture cools and solidifies, a melt of the resin mixture is inserted into a mold 302, and simultaneously inflated with a gas through a blow pin 303. Examples of gases include air, nitrogen, carbon dioxide, and argon. That is, the method for producing a blow-molded article by direct blow molding preferably includes a step of inserting a melt-kneaded product of the resin mixture into a mold, introducing a gas, and stretching the resin mixture.

When the molten resin mixture is stretched by the gas, the resin mixture adheres to the inner wall of the blow mold and cools and solidifies in that state. Finally, the blow mold is opened, and the blow-molded article is removed from the blow mold. Since the resin comprised in the resin mixture is stretched through this blow molding, it is possible to obtain a molded article with a high strength.

Next, a method of checking chemical attack in the toner stored in the toner bottle obtained by blow molding will be described.

The toner is stored in the toner bottle obtained by blow molding. The toner bottle comprising the toner is left under a usage environment. In the chemical attack evaluation according to the present disclosure, the usage environment is set at 50°C for 72 hours, and the toner bottle is left in a thermostatic chamber for testing. The toner bottle left under a usage environment is removed, and out of the toner stored in the toner bottle, only the toner attached to the inner surface of the bottle is removed and observed under an electron microscope.

In the present disclosure, after the toner is discharged from the bottle with the opening of the toner bottle facing downward, the toner attached to the inner surface of the bottle is attached to an adhesive tape, and only the toner attached to the inner surface of the bottle is removed.

When deformation on the surface of toner particles of the toner attached to the inner surface of the bottle is observed under an electron microscope, in the toner particles in which chemical attack has occurred, deformed parts can be observed on the surface in contact with the toner bottle. The deformed parts on the surface in contact with the toner bottle can be identified by the fact that they have less irregularities than surrounding areas in an image observed under an electron microscope.

### Image forming apparatus

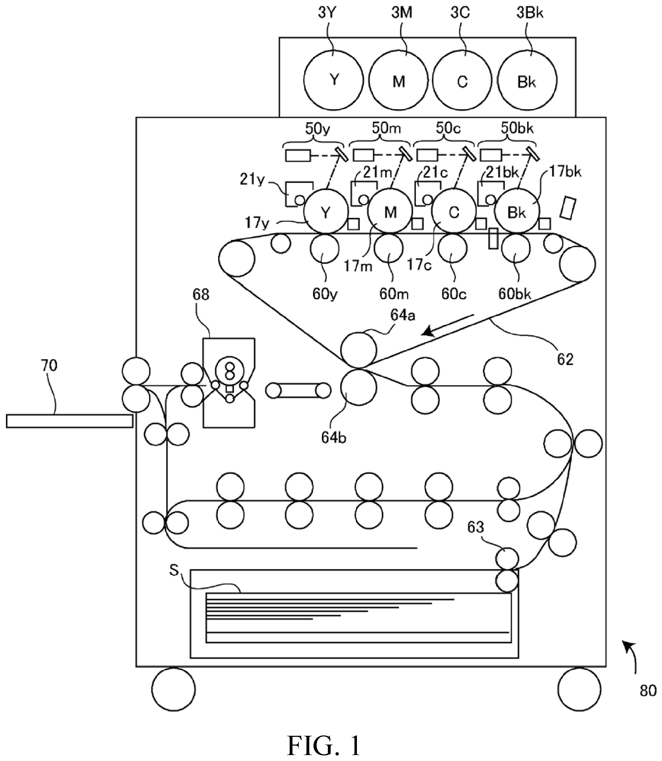

Hereinafter, an image forming apparatus using a toner storage bottle obtained by the production method of the present disclosure will be described with reference to the drawings. FIG. 1 is a schematic configuration illustrative diagram showing a four-color image forming apparatus using an electrophotographic method, and 80 in the drawing indicates a main body of the image forming apparatus. An image forming apparatus 80 is configured as a so-called intermediate transfer tandem type image forming apparatus in which four-color image forming units are arranged side by side on an intermediate transfer belt.

The image forming apparatus 80 performs image formation as follows. First, in the image forming apparatus 80, an electrostatic latent image is formed on a photosensitive drum 17 (17y, 17m, 17c, 17bk) by an exposure device 50 (50y, 50m, 50c, 50bk) based on print data. Then, the formed electrostatic latent image is developed by a development device 21(21y, 21m, 21c, 21bk) to form a toner image.

The toner image is transferred onto an intermediate transfer component 62 by a primary transfer device 60 (60y, 60m, 60c, 60bk), and is transferred onto a sheet material S supplied from a paper-feeding device 63 in a secondary transfer unit 64 (64a, 64b). Next, the toner image transferred onto the sheet S is fixed onto the sheet material S by a fixing means 68 and then discharged onto a paper discharge tray 70.

In the image forming apparatus 80, as described above, a toner image is formed by developing it in the development device 21. In this case, in order to supply the toner to the development device 21, a detachable toner bottle 3 (3Y, 3M, 3C, 3Bk) can be used. The toner bottle produced by the production method of the present disclosure is a toner bottle used in this manner.

### EXAMPLES

The present disclosure will be described in detail next on the basis of examples and comparative examples. However, the present disclosure is not limited to these examples.

In the following examples and comparative examples, unless otherwise specified, "%" means "mass%."

### (Examples A1 to A12 and Comparative Examples A1 and A2)

### <Production of toner bottle by stretch blow molding>

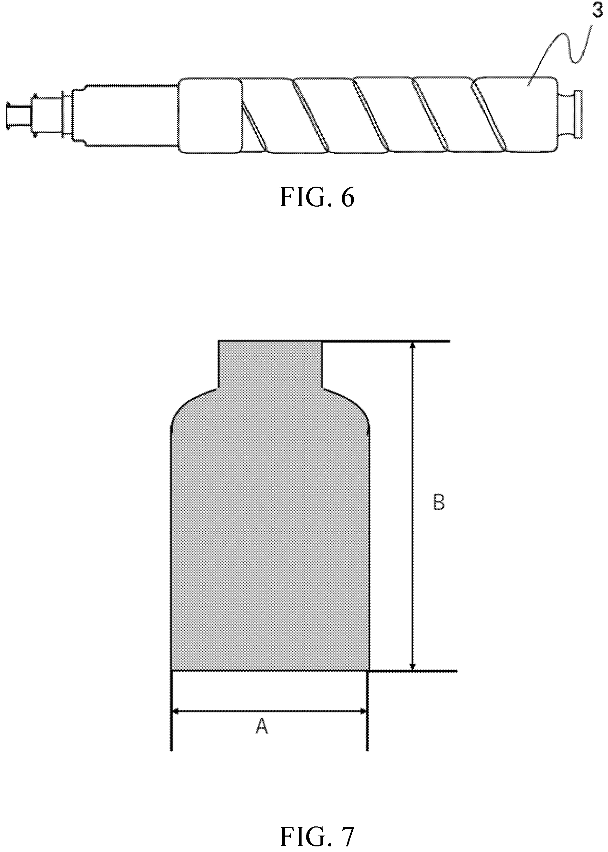

A toner bottle (total length (B) 439.5 mm, diameter (A) 101 mm) illustrated in FIG. 7 was produced using a single-stage stretch blow molding apparatus (ASB-70DPH by Nissei ASB Machine Co., Ltd.). The blow stretching ratio was set to "longitudinal stretch factor × transversal stretch factor = 6.7".

The "longitudinal stretch factor" of the blow stretching ratio is a value calculated by dividing the "total length after stretching" by the "total length (before stretching) of the portion of the preform (heated portion) that reaches the stretching temperature".

The "transversal stretch factor" of the blow stretching ratio is a value calculated by dividing the "diameter of the intermediate portions after stretching" by the "diameter (before stretching) of the intermediate portion of the preform".

Firstly the materials given in Table 1 below were melt-kneaded and pelletized, to produce to Masterbatch having a carbon black concentration of 5 mass%.

**[Table 1]**

| Material | Mixing ratio (mass%) |
|---|---|
| Carbon black (product name: MA-100; by Mitsubishi Chemical Corporation) | 5 |
| PP (product name: Prime Polypro E701G; by Prime Polymer Co., Ltd.) | 95 |

Next, masterbatch having a carbon black concentration of 5 mass%, prepared above, and PP, were mixed in the proportions given in Table 2 below, and were melt-kneaded and subsequently pelletized, to obtain pellets as the resin mixture.

**[Table 2]**

| Material | Mixing ratio (mass%) |
|---|---|
| Masterbatch with a carbon black concentration of 5 mass% | 1.4 |
| PP (product name: Prime Polypro E701G; by Prime Polymer Co., Ltd.) | 98.6 |

### <Blow molding conditions>

Pellets as the resin mixture were put into an extrusion molding apparatus of a one-stage method stretch blow molding apparatus (product name: ASB-70DPH; commercially available from Nissei ASB Machine Co., Ltd.), and biaxial stretch blow molding was performed to mold a toner bottle. Here, the one-stage method stretch blow molding machine can continuously perform a step of producing a preform having a test tube shape by injection molding and a step of biaxially stretching and blow molding the preform to produce a molded product having a bottle shape. In addition, the screw diameter of the injection molding machine in the molding machine was 54 mm.

First, as a preform molding mold there was prepared a mold capable of molding a preform having an outer diameter of 30 mm, a wall thickness of 3.7 mm, and a length of 220 mm. Then, a preform was molded under the following molding conditions.
- Screw diameter: 54 mm
- Screw position prior to filling of resin mixture into cavity: 95 mm
- Injection speed
   Up to 5 mm of screw advance: 50% of maximum speed
   Up to 20 mm of further screw advance: 30% of maximum speed
   Up to 35 mm of further screw advance: 25% of maximum speed
   PV switch position: 35 mm
- First holding pressure stage
   30 MPa, 4 s
- Second holding pressure stage
   20 MPa, 7.99 s
- Heating cylinder temperature: 230°C
- Cooling time: 10.0 seconds
- Mold temperature: 20°C

After a cooling time of 10.0 seconds elapsed, the preform was demolded, and transported to a biaxial stretching blow station of the one-stage method stretch blow molding machine. Here, the temperature of the preform during transportation was adjusted as follows.
- Preform heating temperature
   10% of the total length of the preform from the top thereof: 180°C
   25% of the total length of the preform from the top thereof: 200°C
   50% of the total length of the preform from the top thereof: 200°C
   75% of the total length of the preform from the top thereof: 180°C

Next, the preform adjusted to the above temperature was put into a cylindrical mold having a size corresponding to the size of the toner bottle and adjusted to a temperature of 20°C, and biaxial stretch-blow molding was performed to produce a blow bottle. The temperature of the preform during transportation was controlled by heating, and the surface temperature of the center of the preform immediately before it was put into the cylindrical mold was 150°C.

First, a stretching rod at a retreating position was inserted into the preform through the opening of the preform and was advanced until it came into contact with the top of the preform. Next, the air pressure at which the stretching rod was driven was set to 1.2 MPa, and the stretching rod was further advanced. Next, 0.5 seconds after further advancement of the stretching rod started, primary air was introduced into the preform through the opening of the preform. The pressure of the primary air was 0.4 MPa.

Next, secondary air was introduced 0.7 seconds after the primary air was introduced. The pressure of the secondary air was 1.2 MPa. Then, air was introduced into the preform for 2.7 seconds from when introduction of the primary air started. Next, the pressure in the preform was returned to atmospheric pressure over 0.5 seconds. Accordingly, a toner bottle was produced by blow molding. This bottle was a toner bottle comprising virgin PP that has not been recycled.

By the above method, 200 toner bottles comprising virgin PP were prepared.

### (Example A1)

### <Production of recycled pellets>

All the 200 toner bottles comprising virgin PP prepared above were filled with a black toner stored in an electrophotographic toner bottle (product name toner NPG-67; commercially available from Canon Inc.). The black toner comprised 6.9 parts by mass of an ester wax with respect to 100 parts by mass of the toner. Next, the black toner filled into the toner bottle comprising virgin PP was discharged through the opening of the toner bottle facing vertically downward. Even after this operation, a small amount of black toner was attached to each inner wall of the toner bottle. In this case, the amount of the black toner remaining in the toner bottle was 0.321 mass%, as an average value of the 200 toner bottles, based on the mass of the main body of the toner bottle. Here, the mass of the main body of the toner bottle is the mass of only the toner bottle and the toner remaining inside of the toner bottle after all supply parts attached to the toner bottle were removed.

Next, the 200 toner bottles with the toner attached thereinto prepared above were pulverized using a pulverizer into a size of about 5 to 10 mm square to obtain a pulverized product (hereinafter referred to as a flake product). This flake product was melt-kneaded using a twin-screw extruder (PCM-46, commercially available from Ikegai Corporation) at a temperature of 210°C, a screw rotational speed of 200 rpm, a vent degassing of -0.08 MPa, and a discharge rate of 50 kg/h, and then pelletized. The obtained recycled pellets were used as MR-PP (1-1) (first pellets).

### <Production of blow bottle>

A polycarbodiimide compound was added to MR-PP (1-1), and using the above one-stage method stretch blow molding apparatus, biaxial stretch-blow molding was performed under the same blow molding conditions as above. Here, the polycarbodiimide compound was diluted and prepared in advance as masterbatch pellets so that they were easily uniformly stirred in a blender. Specifically, the polycarbodiimide compound and PP were mixed at a ratio shown in Table 3, melt-kneaded and then pelletized to prepare polycarbodiimide masterbatch pellets (second pellets).

**[Table 3]**

| Material | Mixing ratio (mass%) |
|---|---|
| Polycarbodiimide compound (product name: Carbodilite HMV-15CA; Nisshinbo Chemical Inc.) | 10.0 |
| PP (product name: Prime Polypro E701G; by Prime Polymer Co., Ltd.) | 90.0 |

Before materials were put into the molding machine, 3.0 mass% of polycarbodiimide masterbatch pellets (second pellets) were added to MR-PP (1-1) (first pellets), and uniformly stirred in a blender to form a pellet mixture. Since the polycarbodiimide masterbatch pellets were diluted in a proportion shown in Table 3, the polycarbodiimide was comprised in a substantial proportion of 0.3 mass%.

The pellet mixture stirred in a blender was put into the blow molding machine, and biaxial stretch-blow-molded under the same blow molding conditions as above. The obtained toner bottle was a toner bottle (1-1A). The toner was stored in the toner bottle (1-1A) and left under a usage environment at 50°C for 72 hours. Then, the toner attached to the inner surface of the toner bottle was removed, and the surface of toner particles was observed under an electron microscope. As a result, no deformation on the surface of the toner particles was observed and it was confirmed that no chemical attack occurred.

### (Examples A2 and A3)

Toner bottles (1-2A) and (1-3A) were produced in the same manner as in Example A1 except that the mixing ratio of MR-PP (1-1) and the polycarbodiimide masterbatch was changed as shown in Table 4. Using the toner bottles (1-2A) and (1-3A), the occurrence of chemical attack was checked in the same procedure as for the toner bottle (1-1A), and it was confirmed that no chemical attack had occurred.

**[Table 4]**

| Example | Molded article | Mixing ratio (mass%) | | Content of polycarbodiimide compounds with respect to 100 parts by mass of wax (parts by mass) | Actual amount of polycarbodiimide added (mass%) | Chemical attack |
|---|---|---|---|---|---|---|
| | | MR-PP | Polycarbodiimide masterbatch | | | |
| A1 | Toner bottle (1-1A) | 97.0 | 3.0 | 1396.0 | 0.3 | Not occurred |
| A2 | Toner bottle (1-2A) | 98.0 | 2.0 | 921.0 | 0.2 | Not occurred |
| A3 | Toner bottle (1-3A) | 99.0 | 1.0 | 456.0 | 0.1 | Not occurred |

In the toner bottles (1-1A), (1-2A) and (1-3A), the toner bottle was pulverized and melt-kneaded to form first pellets, and mixed with polycarbodiimide compound second pellets (masterbatch pellets) prepared in advance, before they were put into the molding machine.

### (Example A4)

### <Production of recycled pellets>

0.3 mass% of a polycarbodiimide compound (product name: Carbodilite HMV-15CA; commercially available from Nisshinbo Chemical Inc.) was uniformly added to a flake product prepared in the same manner as in Example A1, and the mixture was melt-kneaded using a twin-screw extruder (PCM-46, commercially available from Ikegai Corporation) at a temperature of 210°C, a screw rotational speed of 200 rpm, a vent degassing of -0.08 MPa, and a discharge rate of 50 kg/h, and then pelletized. The polycarbodiimide used here was in the form of a powder, and no masterbatch pellets. The obtained recycled pellets were used as MR-PP (2-1).

### <Production of blow bottle>

MR-PP (2-1) was put into the above one-stage method stretch blow molding apparatus and biaxial stretch-blow-molded under the same blow molding conditions as above. Since a polycarbodiimide was added during the procedure of extruding MR-PP (2-1), unlike Examples A1 to A3, when materials were put into the blow molding machine, no polycarbodiimide was added. The obtained toner bottle was used as a toner bottle (2-1A).

### (Examples A5 and A6)

MR-PP (2-2) and (2-3) pellets were prepared in the same manner as in MR-PP (2-1) in Example A4 except that the formulation proportion of the polycarbodiimide was changed as shown in Table 5.

**[Table 5]**

| Material | Mixing ratio (mass%) | |
|---|---|---|
| | Flake product | Polycarbodiimide |
| MR-PP (2-1) | 99.7 | 0.3 |
| MR-PP (2-2) | 99.8 | 0.2 |
| MR-PP (2-3) | 99.9 | 0.1 |

The obtained pellets were biaxial stretch-blow-molded under the same conditions as in Example A4 to obtain toner bottles (2-2A) and (2-3A). The toner was stored in each bottle and deformation on the surface of toner particles of the toner attached to the inner surface of the toner bottle after being left at 50°C for 72 hours was observed. The toner bottle (2-2A) was evaluated as Example A5, and the toner bottle (2-3A) was evaluated as Example A6. As a result, in Examples A4 to A6, no deformation on the surface of the toner particles was observed and it was confirmed that no chemical attack occurred.

In Examples A4 to A6, a carbodiimide compound was added when the pulverized product (flake) of the toner bottle with toner attached was melt-kneaded and pelletized using an extruder without preparing masterbatch pellets. In this method, it was thought that the wax and the carbodiimide compound were sufficiently kneaded in the extruder, and the reaction between the wax and the carbodiimide compound sufficiently proceeded. Therefore, it was thought that transfer of the wax to the inner surface of the toner bottle was sufficiently prevented, and chemical attack was inhibited.

Table 6 shows the evaluation results of chemical attack after toner bottles of Examples A4 to A6 were molded.

**[Table 6]**

| Example | Molded article | Material | Content of polycarbodiimide compounds with respect to 100 parts by mass of wax (parts by mass) | Actual amount of polycarbodiimide added (mass%) | Chemical attack |
|---|---|---|---|---|---|
| A4 | Toner bottle (2-1A) | MR-PP (2-1) | 1356.0 | 0.3 | Not occurred |
| A5 | Toner bottle (2-2A) | MR-PP (2-2) | 905.0 | 0.2 | Not occurred |
| A6 | Toner bottle (2-3A) | MR-PP (2-3) | 452.0 | 0.1 | Not occurred |

As described above, toner bottles (2-1A), (2-2A), and (2-3A) were added with polycarbodiimide in the process of pulverizing and melt-kneading the toner bottles to form pellets.

### (Comparative Example A1)

### <Production of recycled pellets>

A flake product prepared in the same manner as in Example A1 was melt-kneaded using a twin-screw extruder (PCM-46, commercially available from Ikegai Corporation) at a temperature of 210°C, a screw rotational speed of 200 rpm, a vent degassing of -0.08 MPa, and a discharge rate of 50 kg/h, and then pelletized. During melt kneading, no polycarbodiimide compound was added. The obtained recycled pellets were used as MR-PP (2-4).

### <Production of blow bottle>

MR-PP (2-4) was put into the above one step stretch blow molding apparatus and biaxial stretch-blow-molded under the same blow molding conditions as above. The obtained toner bottle was used as a toner bottle (2-4A).

The toner was stored in the toner bottle (2-4A) and left under a usage environment (50°C, 72 hours), and the environment test was performed. The toner attached to the inner surface of the toner bottle after the test was observed by the above method, and as a result, deformation on the surface of the toner particles was observed and it was confirmed that chemical attack occurred.

**[Table 7]**

| | Molded article | Mixing ratio (mass%) | | Chemical attack |
|---|---|---|---|---|
| | | MR-PP | Polycarbodiimide | |
| Comparative Example A1 | Toner bottle (2-4A) | 100.0 | 0.0 | Occurred |

### <Production of toner bottle by direct blow molding>

A toner bottle shown in Fig. 7 (total length (B) 150 mm, diameter (A) 76 mm) was produced using a direct blow molding apparatus (model name: MSE-55E/54M-AP (E2), commercially available from Tahara Machinery Ltd.).

First, materials shown in the following Table 8 were melt-kneaded and then pelletized to prepare a masterbatch with a carbon black concentration of 5 mass%.

**[Table 8]**

| Material | Mixing ratio (mass%) |
|---|---|
| Carbon black (product name: MA-100; by Mitsubishi Chemical Corporation) | 5 |
| PP (product name: Prime Polypro E701G; by Prime Polymer Co., Ltd.) | 95 |

Next, the masterbatch with a carbon black concentration of 5 mass% prepared above and PP were mixed at a ratio shown in the following Table 9, melt-kneaded and then pelletized to obtain pellets as a resin mixture.

**[Table 9]**

| Material | Mixing ratio (mass%) |
|---|---|
| Masterbatch with a carbon black concentration of 5 mass% | 1.4 |
| PP (product name: Prime Polypro E701G; by Prime Polymer Co., Ltd.) | 98.6 |

### <Direct blow molding conditions>

Pellets as the resin mixture were put into a direct blow molding machine (model name: MSE-55E/54M-AP(E2), commercially available from Tahara Machinery Ltd.) to mold a toner bottle. The screw diameter of the injection molding machine in the molding machine was 50 mm.

Direct blow molding was performed under the following molding conditions.
·Extruder screw diameter: 50 mm
·Extruder cylinder temperature: 210°C
·Extrusion amount 10 kg/h
·Blow pressure: 0.6 MPa
·Cooling time: 15 s
·Mold temperature: 15°C

A toner bottle was produced by the above direct blow molding. This bottle was a toner bottle made from virgin PP that has not been recycled.

200 toner bottles using virgin PP were produced by the above method.

### (Example A7)

### <Production of recycled pellets>

All the 200 toner bottles comprising virgin PP prepared above were filled with a black toner stored in an electrophotographic toner bottle (product name toner NPG-67; commercially available from Canon Inc.). The black toner comprised 6.9 parts by mass of an ester wax with respect to 100 parts by mass of the toner. Next, the black toner filled into the toner bottle comprising virgin PP was discharged through the opening of the toner bottle facing vertically downward. Even after this operation, a small amount of black toner was attached to each inner wall of the toner bottle. In this case, the amount of the black toner remaining in the toner bottle was 0.321 mass%, as an average value of the 200 toner bottles, based on the mass of the main body of the toner bottle. Here, the mass of the main body of the toner bottle is the mass of only the toner bottle and the toner remaining inside of the toner bottle after all supply parts attached to the toner bottle were removed.

Next, the 200 toner bottles with the toner attached to the inside of the bottle prepared above were pulverized using a pulverizer into a size of about 5 to 10 mm square to obtain a pulverized product (hereinafter referred to as a "flake product"). The content of the wax with respect to 100 parts by mass of the obtained flake product was 0.022 parts by mass. The content of the wax in the flake product was measured using GPC and FT-IR.

Next, the flake product was melt-kneaded using a twin-screw extruder (PCM-46, commercially available from Ikegai Corporation) at a temperature of 210°C, a screw rotational speed of 200 rpm, a vent degassing of -0.08 MPa, and a discharge rate of 50 kg/h, and then pelletized. The obtained recycled pellets were used as MR-PP (3-1) (first pellets).

### <Production of blow bottle>

A polycarbodiimide compound was added to MR-PP (3-1), and direct blow molding was performed under the same blow molding conditions as above. Here, the polycarbodiimide compound was diluted and prepared in advance as masterbatch pellets so that they were easily uniformly stirred in a blender. Specifically, the polycarbodiimide compound and PP were mixed at a ratio shown in Table 10, melt-kneaded and then pelletized to prepare polycarbodiimide masterbatch pellets (second pellets).

**[Table 10]**

| Material | Mixing ratio (mass%) |
|---|---|
| Polycarbodiimide compound (product name: Carbodilite HMV-15CA; Nisshinbo Chemical Inc.) | 10.0 |
| PP (product name: Prime Polypro E701G; by Prime Polymer Co., Ltd.) | 90.0 |

Before materials were put into the molding machine, 3.0 mass% of polycarbodiimide masterbatch pellets (second pellets) were added to MR-PP (3-1) (first pellets), and uniformly stirred in a blender to form a pellet mixture. Since the polycarbodiimide masterbatch pellets were diluted in a proportion shown in Table 10, the polycarbodiimide was comprised in a substantial proportion of 0.3 mass%.

The pellet mixture stirred in a blender was put into the blow molding machine, and direct blow-molded under the same blow molding conditions as above. The obtained toner bottle was a toner bottle (3-1A). The toner was stored in the toner bottle (3-1A) and left under a usage environment at 50°C for 72 hours. Then, the toner attached to the inner surface of the toner bottle was removed, and the surface of toner particles was observed under an electron microscope. As a result, no deformation on the surface of the toner particles was observed and it was confirmed that no chemical attack occurred.

### (Examples A8 and A9)

Toner bottles (3-2A) and (3-3A) were produced in the same manner as in Example A7 except that the mixing ratio of MR-PP (3-1) and the polycarbodiimide masterbatch was changed as shown in Table 11. Using the toner bottles (3-2A) and (3-3A), the occurrence of chemical attack was checked in the same procedure as for the toner bottle (3-1A), and it was confirmed that no chemical attack had occurred.

**[Table 11]**

| Example | Molded article | Mixing ratio (mass%) | | Content of polycarbodiimide compounds with respect to 100 parts by mass of wax (parts by mass) | Actual amount of polycarbodiimide added (mass%) | Chemical attack |
|---|---|---|---|---|---|---|
| | | MR-PP | Polycarbodiimide masterbatch | | | |
| A7 | Toner bottle (3-1A) | 97.0 | 3.0 | 1396.0 | 0.3 | Not occurred |
| A8 | Toner bottle (3-2A) | 98.0 | 2.0 | 921.0 | 0.2 | Not occurred |
| A9 | Toner bottle (3-3A) | 99.0 | 1.0 | 456.0 | 0.1 | Not occurred |

In the toner bottles (3-1A), (3-2A) and (3-3A), the toner bottle was pulverized and melt-kneaded to form first pellets, and mixed with polycarbodiimide compound second pellets (masterbatch pellets) prepared in advance, before they were put into the molding machine.

### (Example A10)

### <Production of recycled pellets>

0.3 mass% of a polycarbodiimide compound (product name: Carbodilite HMV-15CA; commercially available from Nisshinbo Chemical Inc.) was uniformly added to a flake product prepared in the same manner as in Example A7, and the mixture was melt-kneaded using a twin-screw extruder (PCM-46, commercially available from Ikegai Corporation) at a temperature of 210°C, a screw rotational speed of 200 rpm, a vent degassing of -0.08 MPa, and a discharge rate of 50 kg/h, and then pelletized. The polycarbodiimide used here was in the form of a powder, and no masterbatch pellets. The obtained recycled pellets were used as MR-PP (4-1).

### <Production of blow bottle>

MR-PP (4-1) was put into the above direct blow molding apparatus and direct blow-molded under the same blow molding conditions as above. Since a polycarbodiimide was added during the procedure of extruding MR-PP (4-1), unlike Examples A7 to A9, when materials were put into the blow molding machine, no polycarbodiimide was added. The obtained toner bottle was used as a toner bottle (4-1A).

### (Examples A11 and A12)

MR-PP (4-2) and (4-3) pellets were prepared in the same manner as in MR-PP (4-1) in Example A10 except that the formulation proportion of the polycarbodiimide was changed as shown in Table 12.

**[Table 12]**

| Material | Mixing ratio (mass%) | |
|---|---|---|
| | Flake product | Polycarbodiimide |
| MR-PP (4-1) | 99.7 | 0.3 |
| MR-PP (4-2) | 99.8 | 0.2 |
| MR-PP (4-3) | 99.9 | 0.1 |

The obtained pellets were direct blow-molded under the same conditions as in Example A10 to obtain toner bottles (4-2A) and (4-3A). The toner was stored in each bottle and deformation on the surface of toner particles of the toner attached to the inner surface of the toner bottle after being left at 50°C for 72 hours was observed. The toner bottle (4-2A) was evaluated as Example A11, and the toner bottle (4-3A) was evaluated as Example A12. As a result, in Examples A10 to A12, no deformation on the surface of the toner particles was observed and it was confirmed that no chemical attack occurred.

In Examples A10 to A12, a carbodiimide compound was added when the pulverized product (flake) of the toner bottle with toner attached was melt-kneaded and pelletized using an extruder without preparing masterbatch pellets. In this method, it was thought that the wax and the carbodiimide compound were sufficiently kneaded in the extruder, and the reaction between the wax and the carbodiimide compound sufficiently proceeded. Therefore, it was thought that transfer of the wax to the inner surface of the toner bottle was sufficiently prevented, and chemical attack was inhibited.

Table 13 shows the evaluation results of chemical attack after toner bottles of Examples A10 to A12 were molded.

**[Table 13]**

| Example | Molded article | Material | Content of polycarbodiimide compounds with respect to 100 parts by mass of wax (parts by mass) | Actual amount of polycarbodiimide added (mass%) | Chemical attack |
|---|---|---|---|---|---|
| A10 | Toner bottle (4-1A) | MR-PP (4-1) | 1356.0 | 0.3 | Not occurred |
| A11 | Toner bottle (4-2A) | MR-PP (4-2) | 905.0 | 0.2 | Not occurred |
| A12 | Toner bottle (4-3A) | MR-PP (4-3) | 452.0 | 0.1 | Not occurred |

As described above, toner bottles (4-1A), (4-2A), and (4-3A) were added with polycarbodiimide in the process of pulverizing and melt-kneading the toner bottles to form pellets.

### (Comparative Example A2)

### <Production of recycled pellets>

A flake product prepared in the same manner as in Example A7 was melt-kneaded using a twin-screw extruder (PCM-46, commercially available from Ikegai Corporation) at a temperature of 210°C, a screw rotational speed of 200 rpm, a vent degassing of -0.08 MPa, and a discharge rate of 50 kg/h, and then pelletized. During melt kneading, no polycarbodiimide compound was added. The obtained recycled pellets were used as MR-PP (4-4).

### <Production of blow bottle>

MR-PP (4-4) was put into the above direct blow molding apparatus and direct blow-molded under the same blow molding conditions as above. The obtained toner bottle was used as a toner bottle (4-4A).

The toner was stored in the toner bottle (4-4A) and left under a usage environment (50°C, 72 hours), and the environment test was performed. The toner attached to the inner surface of the toner bottle after the test was observed by the above method, and as a result, deformation on the surface of the toner particles was observed and it was confirmed that chemical attack occurred.

**[Table 14]**

| | Molded article | Mixing ratio (mass%) | | Chemical attack |
|---|---|---|---|---|
| | | MR-PP | Polycarbodiimide | |
| Comparative Example A2 | Toner bottle (4-4A) | 100.0 | 0.0 | Occurred |

### (Examples B1 to B6 and Comparative Example B1)

### <Production of toner bottle by direct blowing>

A toner bottle shown in Fig. 7 was produced using a direct blow molding apparatus. A was φ76 mm, and B was 150 mm. KEIYO B5804 (product name, commercially available from Keiyo Polyethylene Co., Ltd.) was used as the pellet material.

First, materials shown in the following Table 15 were melt-kneaded and then pelletized to prepare a masterbatch with a carbon black concentration of 5 mass%.

**[Table 15]**

| Material | Mixing ratio |
|---|---|
| Carbon black (product name: MA-100; by Mitsubishi Chemical Corporation) | 5 mass% |
| PE (product name: KEIYO B5804; Keiyo Polyethylene Co., Ltd.) | 95 mass% |

Next, the masterbatch with a carbon black concentration of 5 mass% prepared above and PE were mixed at a ratio shown in the following Table 16, melt-kneaded and then pelletized to obtain pellets as a resin mixture.

**[Table 16]**

| Material | Mixing ratio |
|---|---|
| Masterbatch with a carbon black concentration of 5 mass% | 1.4 mass% |
| PE (product name: KEIYO B5804; Keiyo Polyethylene Co., Ltd.) | 98.6 mass% |

### <Direct blow molding conditions>

Pellets as the resin mixture were put into a direct blow molding machine (model name: MSE-55E/54M-AP(E2), commercially available from Tahara Machinery Ltd.) to mold a toner bottle. The screw diameter of the injection molding machine in the molding machine was 50 mm.

Direct blow molding was performed under the following molding conditions.
·Extruder screw diameter: 50 mm
·Extruder cylinder temperature: 182°C
·Extrusion amount 10 kg/h
·Blow pressure: 0.6 MPa
·Cooling time: 15 s
·Mold temperature: 15°C

A toner bottle was produced by the above direct blow molding. This bottle was a toner bottle made from virgin PE that has not been recycled.

200 toner bottles using virgin PE were produced by the above method.

### (Example B1)

### <Production of recycled pellets>

All 200 toner bottles comprising virgin PE prepared above were filled with a black toner stored in a toner cartridge (product name: toner NPG-26: commercially available from Canon Inc.). The black toner comprised an ester wax. Next, the black toner inside was discharged through the opening of the toner bottle using virgin PE facing vertically downward. Even after this operation, a small amount of black toner was attached to each inner wall of the toner bottle. In this case, the amount of the black toner remaining in the toner bottle was 0.321 mass%, as an average value of the 200 toner bottles, based on the mass of the main body of the toner bottle. Here, the mass of the main body of the toner bottle is the mass of only the toner bottle and the toner remaining inside of the toner bottle after all supply parts attached to the toner bottle were removed.

Next, each toner bottle with toner attached to the inner surface was pulverized using a pulverizer into a size of about 5 to 10 mm square to obtain a pulverized product (hereinafter referred to as a flake product). This flake product was melt-kneaded using a twin-screw extruder (PCM-46, commercially available from Ikegai Corporation) at a temperature of 200°C, a screw rotational speed of 200 rpm, a vent degassing of -0.08 MPa, and a discharge rate of 50 kg/h, and then pelletized. The obtained recycled pellets were used as MR-PE(1-1) (first pellets).

### <Production of blow bottle>

A polycarbodiimide compound was added to MR-PE (1-1), and direct blow molding was performed under the same blow molding conditions as above. Here, the polycarbodiimide compound was diluted and prepared in advance as masterbatch pellets so that they were easily uniformly stirred in a blender. Specifically, the polycarbodiimide compound and PE were mixed at a ratio shown in Table 17, melt-kneaded and then pelletized to prepare polycarbodiimide masterbatch pellets (second pellets).

**[Table 17]**

| Material | Mixing ratio |
|---|---|
| Polycarbodiimide compound (product name: Carbodilite HMV-15CA; Nisshinbo Chemical Inc.) | 10.0 mass% |
| PE (product name: KEIYO B5804; Keiyo Polyethylene Co., Ltd.) | 90.0 mass% |

Before materials were put into the molding machine, 3.0 mass% of polycarbodiimide masterbatch pellets (second pellets) were added to MR-PE (1-1) (first pellets), and uniformly stirred in a blender to form a pellet mixture. Since the polycarbodiimide masterbatch pellets were diluted in a proportion shown in Table 17, the polycarbodiimide was comprised in a substantial proportion of 0.3 mass%.

The pellet mixture stirred in a blender was put into the blow molding machine, and direct blow-molded under the same blow molding conditions as above. The obtained toner bottle was a toner bottle (1-1B). The toner was stored in the toner bottle (1-1B) and left under a usage environment at 50°C for 72 hours. Then, the toner attached to the inner surface of the toner bottle was removed, and the surface of toner particles was observed under an electron microscope. As a result, no deformation on the surface of the toner particles was observed and it was confirmed that no chemical attack occurred.

### (Examples B2 and B3)

Toner bottles (1-2B) and (1-3B) were produced in the same manner as in Example B1 except that the mixing ratio of MR-PE (1-1) and the polycarbodiimide masterbatch was changed as shown in Table 18. Using the toner bottles (1-2B) and (1-3B), the occurrence of chemical attack was checked in the same procedure as for the toner bottle (1-1B), and it was confirmed that no chemical attack had occurred.

**[Table 18]**

| Example | Molded article | Mixing ratio (mass%) | | Content of polycarbodiimide compounds with respect to 100 parts by mass of wax (parts by mass) | Actual amount of polycarbodiimide added (mass%) | Chemical attack |
|---|---|---|---|---|---|---|
| | | MR-PE | Polycarbodiimide masterbatch | | | |
| B1 | Toner bottle (1-1B) | 97.0 | 3.0 | 1396.0 | 0.3 | Not occurred |
| B2 | Toner bottle (1-2B) | 98.0 | 2.0 | 921.0 | 0.2 | Not occurred |
| B3 | Toner bottle (1-3B) | 99.0 | 1.0 | 456.0 | 0.1 | Not occurred |

In the toner bottles (1-1B), (1-2B) and (1-3B), the toner bottle was pulverized and melt-kneaded to form first pellets, and mixed with polycarbodiimide compound second pellets (masterbatch pellets) prepared in advance, before they were put into the molding machine.

### (Example B4)

### <Production of recycled pellets>

0.3 mass% of a polycarbodiimide compound (product name: Carbodilite HMV-15CA; commercially available from Nisshinbo Chemical Inc.) was uniformly added to a flake product prepared in the same manner as in Example B1, and the mixture was melt-kneaded using a twin-screw extruder (PCM-46, commercially available from Ikegai Corporation) at a temperature of 200°C, a screw rotational speed of 200 rpm, a vent degassing of -0.08 MPa, and a discharge rate of 50 kg/h, and then pelletized. The polycarbodiimide used here was in the form of a powder, and no masterbatch pellets. The obtained recycled pellets were used as MR-PE (2-1).

### <Production of blow bottle>

MR-PE (2-1) was direct blow-molded under the same blow molding conditions as above. Since a polycarbodiimide was added during the procedure of extruding MR-PE (2-1), unlike Examples B1 to B3, when materials were put into the blow molding machine, no polycarbodiimide was added. The obtained toner bottle was used as a toner bottle (2-1B).

### (Examples B5 and B6)

MR-PE (2-2) and (2-3) pellets were prepared in the same manner as in MR-PE (2-1) in Example B4 except that the formulation proportion of the polycarbodiimide was changed as shown in Table 19.

**[Table 19]**

| Material | Mixing ratio (mass%) | |
|---|---|---|
| | Flake product | Polycarbodiimide |
| MR-PE (2-1) | 99.7 | 0.3 |
| MR-PE (2-2) | 99.8 | 0.2 |
| MR-PE (2-3) | 99.9 | 0.1 |

The obtained pellets were direct blow-molded under the same conditions as in Example B4 to obtain toner bottles (2-2B) and (2-3B). The toner was stored in each bottle and deformation on the surface of toner particles of the toner attached to the inner surface of the toner bottle after being left at 50°C for 72 hours was observed. The toner bottle (2-2B) was evaluated as Example B5, and the toner bottle (2-3B) was evaluated as Example B6. As a result, in Examples B4 to B6, no deformation on the surface of the toner particles was observed and it was confirmed that no chemical attack occurred.

In Examples B4 to B6, a carbodiimide compound was added when the pulverized product (flake) of the toner bottle with toner attached was melt-kneaded and pelletized using an extruder without preparing masterbatch pellets. In this method, it was thought that the wax and the carbodiimide compound were sufficiently kneaded in the extruder, and the reaction between the wax and the carbodiimide compound sufficiently proceeded. Therefore, it was thought that transfer of the wax to the inner surface of the toner bottle was sufficiently prevented, and chemical attack was inhibited.

Table 20 shows the evaluation results of chemical attack after toner bottles of Examples B4 to B6 were molded.

**[Table 20]**

| Example | Molded article | Material | Content of polycarbodiimide compounds with respect to 100 parts by mass of wax (parts by mass) | Actual amount of polycarbodiimide added (mass%) | Chemical attack |
|---|---|---|---|---|---|
| B4 | Toner bottle (2-1B) | MR-PE (2-1) | 1356.0 | 0.3 | Not occurred |
| B5 | Toner bottle (2-2B) | MR-PE (2-2) | 905.0 | 0.2 | Not occurred |
| B6 | Toner bottle (2-3B) | MR-PE (2-3) | 452.0 | 0.1 | Not occurred |

As described above, toner bottles (2-1B), (2-2B), and (2-3B) were added with polycarbodiimide in the process of pulverizing and melt-kneading the toner bottles to form pellets.

### (Comparative Example B1)

### <Production of recycled pellets>

A flake product prepared in the same manner as in Example B1 was melt-kneaded using a twin-screw extruder (PCM-46, commercially available from Ikegai Corporation) at a temperature of 200°C, a screw rotational speed of 200 rpm, a vent degassing of -0.08 MPa, and a discharge rate of 50 kg/h, and then pelletized. During melt kneading, no polycarbodiimide compound was added. The obtained recycled pellets were used as MR-PE (2-4).

### <Production of blow bottle>

MR-PE (2-4) was direct blow-molded under the same blow molding conditions as above. The obtained toner bottle was used as a toner bottle (2-4B).

The toner was stored in the toner bottle (2-4B) and left under a usage environment (50°C, 72 hours), and the environment test was performed. The toner attached to the inner surface of the toner bottle after the test was observed by the above method, and as a result, deformation on the surface of the toner particles was observed and it was confirmed that chemical attack occurred.

**[Table 21]**

| | Molded article | Mixing ratio (mass%) | | Chemical attack |
|---|---|---|---|---|
| | | MR-PE | Polycarbodiimide | |
| Comparative Example B1 | Toner bottle (2-4B) | 100.0 | 0.0 | Occurred |

The present disclosure is not limited by the embodiments, and can be variously changed and modified without departing from the spirit and the scope of the present disclosure. Therefore, in order to make the scope of the present disclosure public, the following claims are appended.

This application claims the benefit of Japanese Patent Application No. 2023-172354 filed on October 3, 2023, Japanese Patent Application No. 2023-172370 filed on October 3, 2023, and Japanese Patent Application No. 2024-134343 filed on August 9, 2024, which are hereby incorporated by reference herein in their entirety.

3 : Toner bottle, 21 : Developing apparatus, 80 : Image forming apparatus, 60 : Primary transfer apparatus, 62 : Intermediate transfer member, 63 : Paper feeding apparatus, 64 : Secondary transfer unit, 68 : Fixing means, 70 : Paper output tray, 101 : Injection molding machine, 102 : Preform mold, 103 : Preform mold, 104 : Preform, 105 : Heating cylinder, 106 : Preform opening, 107 : Heating furnace, 108 : Blow mold, 109 : Stretching rod, 110 : Gas, 112 : Blow-molded article, 207 : Extrusion screw, 301 : Direct blow molding machine, 302 : Direct blow mold, 303 : Blow pin

## Claims

1. A method for producing a blow-molded article, comprising a step of obtaining a blow-molded article by blow-molding a resin mixture comprising at least wax, polyethylene or polypropylene and a carbodiimide compound.

2. The method for producing the blow-molded article according to claim 1,
wherein the polyethylene or the polypropylene is the polyethylene, and
the polyethylene is at least one selected from the group consisting of high-density polyethylene, low-density polyethylene, and linear low-density polyethylene.

3. The method for producing the blow-molded article according to claim 1,
wherein the polyethylene or the polypropylene is the polypropylene, and
the polypropylene is at least one selected from the group consisting of a homopolymer, a random copolymer, and a block copolymer.

4. The method for producing the blow-molded article according to any one of claims 1 to 3, wherein the wax comprises an ester wax.

5. The method for producing the blow-molded article according to any one of claims 1 to 4, wherein the blow-molded article is a toner bottle.

6. The method for producing the blow-molded article according to any one of claims 1 to 5, wherein the blow-molded article is a stretch-blow-molded article or a direct blow-molded article.

7. The method for producing the blow-molded article according to any one of claims 1 to 5,
wherein the step of obtaining a blow-molded article includes
a step of obtaining pellets of a melt-kneaded product of the resin mixture, and
a step of direct blow molding using the pellets.

8. The method for producing the blow-molded article according to any one of claims 1 to 5,
wherein the step of obtaining a blow-molded article includes
a step of inserting a melt-kneaded product of the resin mixture into a mold, introducing a gas, and stretching the resin mixture.

9. The method for producing the blow-molded article according to any one of claims 1 to 5,
wherein the step of producing a blow-molded article includes
a step of obtaining pellets of a melt-kneaded product of the resin mixture,
a step of producing a preform using the pellets, and
a step of blow-molding the preform.

10. The method for producing the blow-molded article according to claim 9, wherein the preform has a test tube shape.

11. The method for producing the blow-molded article according to claim 9 or 10,
wherein the step of blow-molding the preform includes
a step of stretching the preform in a longitudinal direction of the preform using a stretching rod, and
a step of introducing a gas into the preform and stretching the preform in a circumferential direction.

12. The method for producing the blow-molded article according to any one of claims 1 to 5,
wherein the step of producing a blow-molded article includes
a step of melt-kneading the wax and the polyethylene or the polypropylene to form first pellets,
a step of melt-kneading the carbodiimide compound and other polyethylene or polypropylene to form second pellets,
a step of mixing the first pellets and the second pellets to obtain a pellet mixture, and
a step of blow-molding the pellet mixture.

13. The method for producing the blow-molded article according to claim 12, wherein the step of blow-molding includes a step of injection molding the pellet mixture.

14. The method for producing the blow-molded article according to any one of claims 1 to 13, wherein, in the resin mixture, a content of the carbodiimide compound with respect to 100 parts by mass of the wax is 400 to 1,500 parts by mass.

15. A resin composition comprising a melt-kneaded product of wax, polyethylene or polypropylene and a carbodiimide compound.

16. A pellet comprising a melt-kneaded product of wax, polyethylene or polypropylene and a carbodiimide compound.
